# EUROPÄISCHE PATENTSCHRIFT

(11) **EP 0 630 674 B1**
(45) Veröffentlichungstag und Bekanntmachung des Hinweises auf die Patenterteilung: **12.02.1997**
(21) Anmeldenummer: 94108258.8
(22) Anmeldetag: 27.05.1994
(51) Int. Cl.: B01D 33/11, E03F 5/14

(54) **Vorrichtung zum Entfernen von Rechengut aus einer mit einer verunreinigten Flüssigkeit durchströmten Zulaufrinne, insbesondere von Kläranlagen**
Apparatus for separating debris from a polluted liquid stream in a gully, especially from purification plants
Dispositif pour la séparation des râtelures d'un courant liquide pollué dans une ligole, spécialement pour installations d'épuration

(30) Priorität: 22.06.1993 DE 4320678
(43) Veröffentlichungstag der Anmeldung: 28.12.1994
(73) Patentinhaber: Klasnic, Branko, D-81925 München (DE)
(72) Erfinder: Klasnic, Branko, D-81925 München (DE)
(74) Vertreter: Görg, Klaus, Dipl.-Ing.

(56) Entgegenhaltungen:
- EP-A- 0 163 158
- DE-A- 4 213 847
- GB-A- 1 002 819

## Beschreibung

Die Erfindung betrifft eine Vorrichtung zum Entfernen von Rechengut aus einer von einer verunreinigten Flüssigkeit durchströmten Zulaufrinne gemäß dem Oberbegriff des Anspruch 1.

Eine derartige Vorrichtung ist aus der DE-A-42 13 847 bekannt. Diese Vorrichtung zum Entfernen von Rechengut aus einer von einer verunreinigten Flüssigkeit durchströmten Zulaufrinne, insbesondere von Kläranlagen, besitzt einen sowohl zum Teil bis zum Boden der Zulaufrinne reichenden als auch zum Teil aus der Flüssigkeit herausragenden, flüssigkeitsdurchlässigen, um eine Drehachse rotierenden Siebkörper, wobei der Siebkörper als ein mit umlaufender Wand und Sieböffnungen versehenes Gebilde ausgestaltet ist, das sich in Strömungsrichtung der Flüssigkeit verjüngt. Des weiteren weist diese Vorrichtung eine in den Siebkörper teilweise hineinragende und sich daran anschließende motorgetriebene schräg aufwärtsgerichtete, zu einer Abwurfstelle führende und als Schneckenfördereinrichtung ausgebildete Förderstrecke auf, die ein Gehäuse und eine Schnecke umfaßt.

Ferner ist aus der GB-A-1 002 819 eine Vorrichtung zum Entfernen von Verunreinigungen aus einer Flüssigkeit bekannt. Diese Vorrichtung umfaßt einen Container für die Flüssigkeit, wobei der Container eine Überlaufeinrichtung enthält, die zum Entfernen von auf der Flüssigkeitsoberfläche aufschwimmenden unerwünschten Materialien, wie etwa Schaum, dient, und eine Sammeleinrichtung zum Sammeln von Sedimenten, die sich in einem unteren Abschnitt des Containers ablagern. Des weiteren umfaßt die Vorrichtung eine Filtereinrichtung und eine Pumpe, mit der ein Zwischenabschnitt der Flüssigkeit durch die Filtereinrichtung gefördert werden kann, sowie eine Reinigungseinrichtung zum kontinuierlichen Reinigen der Filtereinrichtung. Die Filtereinrichtung weist einen in Form einer Scheibe, Trommel oder eines Konus ausgebildeten Filter auf, der radiale, lamellenähnliche Speichen besitzt, die die Filtereinrichtung durch die von der Pumpe erzeugte Strömung zur Rotation bringen. Die Filtereinrichtung kann auch durch eine andere Antriebseinrichtung bewegt werden. Überdies ragt der Filter etwa zur Hälfte in die von der Pumpe erzeugte Strömung, wobei die Filterfläche im wesentlichen senkrecht zur Strömungsrichtung angeordnet ist. Mittels dieser Vorrichtung wird ein umwälzartiges Reinigungsverfahren zum Reinigen der in dem Container enthaltenen verunreinigten Flüssigkeit durchgeführt.

Auch ist eine Vorrichtung bekannt, die mit einem schräggestellten, sowohl zum Teil aus dem Wasserspiegel herausragenden als auch bis zur Sohle der Zulaufrinne reichenden flüssigkeitsdurchlässigen und im wesentlichen zylinder- bzw. trommelförmig ausgebildeten Sieb versehen ist. Eine schräg aufwärtsgerichtete, zu einer Abwurfstelle führende und als Schneckenfördereinrichtung mit Gehäuse und Schneckenwelle ausgebildete Förderstrecke für das Rechengut ist mit ihrem unteren Ende durch das zylinderförmige Sieb hindurchgeführt und ihre Drehachse in der Drehachse des Zylinders angeordnet. Das zylinderförmige Sieb ist drehbar auf dem Gehäuse der Schneckenfördereinrichtung gelagert. Die Welle der Schneckenfördereinrichtung trägt an ihrem unteren Ende einen Mitnehmerarm, der starr mit dem zylinderförmigen Sieb verbunden ist und das Sieb mitdreht, wenn die Schneckenwelle rotiert. Die Schneckenfördereinrichtung ist an dem in das zylinderförmige Sieb hineinragenden Ende mit einer sich etwa über ein Viertel des Umfangs des Schneckengehäuses erstreckenden Einwurföffnung für das Rechengut versehen. Das zylinderförmige Sieb besitzt auf seiner Innenwand mehrere schraubenförmig angeordnete Leitbleche. Die Schneckenfördereinrichtung und das zylinderförmige Sieb sind so in der von mit Rechengut verunreinigtem Wasser durchströmten Zulaufrinne angeordnet, daß das Wasser in das Sieb hineinströmt, das Rechengut über die sich mit dem Zylinder mitdrehenden Leitbleche an der Innenwand des Siebes nach oben aus dem Wasser herausgefördert wird und bei fortschreitender Drehung in die Einwurföffnung im Schneckengehäuse fällt. Von dort aus wird das Rechengut mittels der Förderschnecke abtransportiert. Die Förderschnecke ist entsprechend der schräggestellten Achse des zylinderförmigen Siebes vorgesehen und angeordnet, so daß das Rechengut in Strömungsrichtung schräg nach oben gefördert und dabei verdichtet, zerkleinert und weiter entwässert wird. Die Förderschnecke kann sowohl über eine gleichmäßige Steigung als auch über Abschnitte mit unterschiedlichen Steigungen verfügen. Ein Halterungsarm ist über dem aus der Wasseroberfläche herausragenden Teil des zylinderförmigen Siebes angeordnet und am Gehäuse der Schneckenfördereinrichtung befestigt. Der Halterungsarm trägt eine Bürsten- und Spritzwassereinrichtung zur Säuberung der Sieböffnungen von Rechengut. Mit der beschriebenen Vorrichtung läßt sich ein dem Wasser der Zulaufrinne entnommenes Rechengut mit einem Feststoffgehalt von ca. 38% realisieren. Aufgrund der schräggestellten Anordnung der Vorrichtung, mit ca. 35° zur Horizontalen, besitzt sie jedoch ein unvorteilhaft großes Baumaß. Das von den Leitblechen herabfallende Rechengut trifft nicht immer die Einwurföffnung, woraus ein uneffektiver Betrieb resultiert. Die Vorrichtung verfügt ferner über nicht unerhebliche hydraulische Verluste.

Der Erfindung liegt daher das technische Problem zugrunde, eine gattungsgemäße Vorrichtung der eingangs beschriebenen Art so zu modifizieren, weiterzubilden oder neu auszugestalten, daß eine einfache und effektive Herausnahme der Verunreinigungen bzw. des Rechengutes aus der Flüssigkeit einer Zulaufrinne bei möglichst geringer Baulänge, optimaler Siebeffektivität und mit geringen hydraulischen Verlusten erreicht werden kann.

Dieses technische Problem wird gelöst durch eine erfindungsgemäße Vorrichtung mit den Merkmalen des Patentanspruchs 1.

Ein weiteres vorteilhaftes Ausgestaltungsmerkmal der erfindungsgemäßen Vorrichtung sieht vor, daß die Schnecken Fördereinrichtung eine am Gehäuse befindliche, oben liegende Eingabeöffnung für das Rechengut aufweist.

Der Siebkörper ist vorzugsweise als kegelförmiger und sich in Strömungsrichtung verjüngender Siebteller ausgebildet. Der Siebteller kann aus voneinander beabstandeten Stäben gebildet werden, die gleichzeitig die Kontur bzw. die umlaufende Wand und die Sieböffnungen des Siebtellers formen.

Desweiteren kann der Siebkörper kegelstumpfförmig ausgebildet sein und sich in Strömungsrichtung verjüngen, wobei die kleinere Stirnseite des kegelstumpfförmigen Siebkörpers offen und/oder mit Verstrebungen versehen oder als eine mit Sieböffnungen versehene geschlossene Wand ausgebildet ist.

Der Siebkörper ist in seiner Stellung zur Strömungsrichtung veränderbar.

Die Sieböffnungen des Siebkörpers sind als Löcher, Langlöcher, Schlitze oder in anderen adäquaten Öffnungsformen ausgebildet.

Der Siebkopf verfügt auf seiner der Strömung zugewandten Seite bzw. seiner Innenseite über sich im wesentlichen radial erstreckende oder auf den erzeugenden des Siebkörpers liegende oder in anderen Richtungen angeordnete Mitnehmerrippen. Diese Mitnehmerrippen sind vorzugsweise geradlinig, sichel- oder bogenförmig verlaufend ausgebildet.

Der Siebkörper und die Schneckenfördereinrichtung besitzen eine gemeinsame Drehachse und/oder eine gemeinsame Antriebsvorrichtung. Die Antriebswelle des Siebkörpers kann über eine Kugel-, Kardan- oder adäquates -gelenk mit der Schneckenfördereinrichtung verbunden sein. Ferner ist es möglich, daß der Siebkörper und die Schneckenfördereinrichtung über verschiedene Drehachsen und/oder Antriebswellen und/oder verschiedene Antriebsvorrichtungen verfügen und der Siebkörper separat von der Schneckenfördereinrichtung gelagert ist. Siebkörper und Schneckenfördereinrichtung sind auch unabhängig voneinander einstellbar.

Eine oder mehrere Spritzvorrichtungen sind im Bereich des aus der Flüssigkeit herausragenden Teils des Siebkörpers vorgesehen und die Strahlrichtung der Spritzvorrichtungen so gewählt, daß mögliches die Sieböffnungen des Siebkörpers verstopfendes Rechengut in den Siebkörper bzw. in den zuströmenden Bereich der Zulaufrinne vor dem Siebkörper zurückgeschwemmt wird.

Leichtbleche sind am Boden und unteren Wandbereich der Zulaufrinne angeordnet und so gestaltet, daß sie die durch die Zulaufrinne und den darin arbeitenden Siebkörper gebildeten freien Öffnungen strömungsgünstig verschließen.

Die erfindungsgemäße Vorrichtung zum Entfernen von Rechengut aus einer mit einer verunreinigten Flüssigkeit durchströmten Zulaufrinne kann mit geringem materiellen und technischen Aufwand und somit kostengünstig realisiert werden. Außerdem gewährleistet die Vorrichtung einen kontinuierlichen Betrieb und somit hohe Förderleistungen beim Entfernen des Rechengutes aus der verunreinigten Flüssigkeit.

Aufgrund der Auslegung des Siebkörpers als kegelförmiger Siebteller vergrößert sich bei geneigter Aufstellung mit zunehmendem Neigungswinkel die freie Durchtritts- und Siebfläche. Dies unterstützt eine platzsparende Lösung. Desweiteren resultieren aus der großen Durchtrittsfläche geringere hydraulische Verluste. Aufgrund der gedrungenen Bauweise des Siebtellers und der obengenannten positiven Auswirkung einer geneigten Aufstellung ist es möglich, auch die am Siebteller angreifende Schneckenfördereinrichtung sehr steil aufzustellen. So kann durch Kombination eines steilen Anstellwinkels der Schneckenfördereinrichtung mit einer entsprechenden Neigung des Siebtellers eine sehr kurze Einbaulänge der Gesamtkonstruktion bei entsprechender Materialreduzierung erzielt werden. Da die Kegelspitze des Siebtellers in Strömungsrichtung weist, der Siebteller sich also in dieser Richtung verjüngt, fließt die verunreinigte Flüssigkeit in die Kegelöffnung des Siebtellers ein und konzentriert sich zur Kegelspitze. Verbunden mit dem Abtransport des Rechengutes über die Schneckenfördereinrichtung in entgegengesetzter Richtung zur Strömungsrichtung erfolgt eine besonders intensive Durchmischung des Rechengutes und somit eine erwünschte Auswaschung der organischen Bestandteile und/oder Schlemmstoffe im Rechengut. Als konstruktiv und funktionell sehr vorteilhaft hat es sich erwiesen, den Siebteller aus voneinander beanstandeten Stäben zu bilden, die gleichzeitig die Kontur bzw. die umlaufende Wand und die Sieböffnungen des Siebtellers formen.

Wird der Siebkörper sich in Strömungsrichtung verjüngend kegelstumpfförmig ausgebildet und die kleinere Stirnseite des kegelstumpfförmigen Siebkörpers offen und/oder mit Verstrebungen versehen oder als eine mit Sieböffnungen versehene geschlossene Wand ausgebildet, so lassen sich ebenfalls die bereits in Zusammenhang mit dem obengenannten Siebteller beschriebenen Vorteile erzielen.

Ist der Siebkörper in seiner Stellung zur Strömungsrichtung veränderbar, können seine Sieb- und Fördereigenschaften auf positive Weise unterschiedlichen Pegelständen der Flüssigkeit in der Zulaufrinne angepaßt und auch auf Einbaueigenschaften variabel reagiert werden.

Infolge der Ausbildung der Sieböffnungen als einfache Löcher, Langlöcher, Schlitze oder andere adäquate Öffnungsformen ist der Siebkörper leicht herstellbar und seine Siebeigenschaften effektiv auf ein gewünschtes Einsatzspektrum abstimmbar.

Die erfindungsgemäße Anbringung von Mitnehmerrippen am Siebkörper begünstigt den Abtransport von Rechengut aus der Zulaufrinne. Durch die geradlinig, sichel- oder bogenförmig verlaufende Ausbildung der Mitnehmerrippen kann deren Mitnehmerfunktion positiv beeinflußt werden.

Besitzen der Siebkörper und die Schneckenfördereinrichtung eine gemeinsame Drehachse und einen gemeinsamen Antrieb, so ist die erfindungsgemäße Vorrichtung besonders einfach und kostengünstig herstell- und betreibbar. Verfügen die Schneckenfördereinrichtung und der Siebkörper zwar über einen gemeinsamen Antrieb jedoch über verschiedene Drehachsen, so hat es sich als vorteilhaft erwiesen, die Antriebswelle des Siebkörpers über ein Kugel-, Kardan- oder adäquates -gelenk mit der Schneckenfördereinrichtung zu verbinden.

Verfügen der Siebkkörper und die Schneckenfördereinrichtung über verschiedene Drehachsen und/oder Antriebswellen und/oder verschiedene Antriebsvorrichtungen, und ist der Siebkörper separat von der Schneckenfördereinrichtung gelagert, kann die erfindungsgemäße Vorrichtung besonders gut an bauliche Gegebenheiten sowie an variable Arbeits- und Fördereigenschaften angepaßt werden. Je nach Erfordernis können der Siebkörper und die Schneckenfördereinrichtung dabei sowohl unterschiedliche Drehrichtungen als auch Drehgeschwindigkeiten aufweisen.

Die Spritzeinrichtungen im Bereich des aus der Flüssigkeit herausragenden Teils des Siebkörpers unterbinden auf vorteilhafte Weise ein Verstopfen der Durchlaßöffnungen des Siebkörpers mit Rechengut und schwemmen festsitzendes Rechengut in den Siebkörper bzw. in den zuströmenden Bereich der Zulaufrinne vor dem Siebkörper zurück, was einen zuverlässigen Betrieb der Vorrichtung und eine zuverlässige Reinigung der mit Rechengut verunreinigten Flüssigkeit gewährleistet.

Die Leitbleche am Boden und unteren Randbereich der Zulaufrinne verhindern den Durchtritt verunreinigter Flüssigkeit durch die freien Öffnungen zwischen Siebkörper und Zulaufrinnenwandung und leiten die Flüssigkeit strömungsgünstig zum Siebkörper.

Ein Ausführungsbeispiel der Erfindung mit weiteren Einzelheiten und vorteilhaften Weiterbildungen ist nachfolgend anhand der Zeichnungen beschrieben. Es zeigen:
- Fig. 1: eine schematische Seitenansicht der erfindungsgemäßen Vorrichtung;
- Fig. 2: eine schematische Schnittansicht entlang der Linie II-II in der Fig. 1 und
- Fig. 3: eine schematische Frontalansicht des Siebtellers in einer Zulaufrinne.

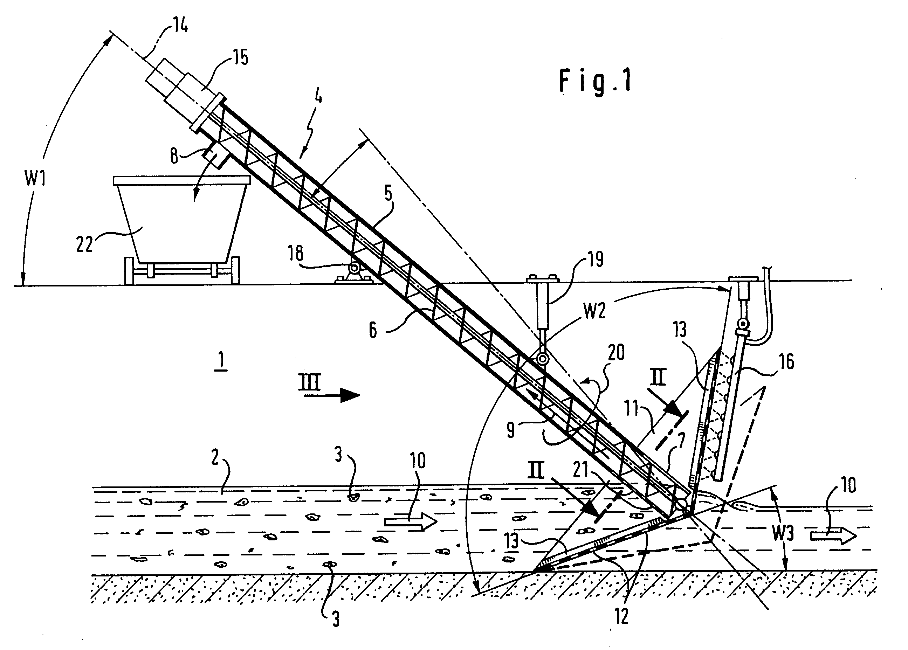

Wie der Fig. 1 zu entnehmen, ist die gesamte Vorrichtung in einer Zulaufrinne 1 angeordnet. Der Flüssigkeitsspiegel der Zulaufrinne 1 kann in bestimmten Grenzen schwanken. Für die nachfolgende Beschreibung wird angenommen, daß es sich bei der Flüssigkeit um mit Rechengut 3, d.h. Feststoffen verschiedener Konsistenz, Größe und Form verunreinigtes Wasser 2 handelt. Die Vorrichtung ist mit schrägstehender Achse 14 in die Zulaufrinne 1 eingeschwenkt, so daß der als Siebteller 11 ausgebildete Siebkörper teilweise in das Wasser 2 eintaucht und mit seinem Tellerrand gegen den Boden und die Wandungen der Zulaufrinne 1 weitgehendst abschließt. Der Winkel w1 zwischen der Drehachse 14 der Vorrichtung und der Horizontalen beträgt ca. 50°. Über ein Querlager 18 kann die Vorrichtung mit Hilfe einer Hebe- und Verstelleinrichtung 19 aus der Zulaufrinne herausgeschwenkt werden, so daß die Vorrichtung für Wartungs- und Reparaturzwecke gut zugänglich ist. Um den Neigungswinkel w1 der Achse 14 zu verstellen und an einen schwankenden Wasserspiegel anzupassen, ist ebenfalls die Hebe- und Verstelleinrichtung 19 vorgesehen. Eine feste Installation der Vorrichtung in der Zulaufrinne 1 ist jedoch ebenso denkbar.

Der obere Teil der Vorrichtung besteht im wesentlichen aus einer bekannten Schneckenfördereinrichtung 4 mit einer über einen aufgesetzten Motor 15 angetriebenen Schnecke 6, die in einem Gehäuse 5 umläuft. Das Gehäuse 5 der Schneckenfördereinrichtung 4 ist im wesentlichen zylindermantelförmig oder trogförmig ausgebildet und besitzt an seinem oberen Ende eine Abwurfstelle 8 für Rechengut 3. Das untere und zum Teil in den Wasserspiegel ragende Ende des Gehäuses 5 der Schneckenfördereinrichtung 4 verfügt über eine obenliegende Eingabeöffnung 7 für das Rechengut 3. Die Schnecke 6 der Fördereinrichtung 4 kann über eine feste Steigung oder über Schneckenabschnitte mit unterschiedlichen Steigungen verfügen, um Transport und Kompressionseigenschaften verschiedenen Erfordernissen anzupassen.

Der kegelförmige Siebteller 11 mit umlaufender Wand und in der Wand befindlichen Sieböffnungen 12 ist drehfest im Bereich der Kegelspitze mit der Schnecke 6 der Fördereinrichtung 4 verbunden und im Gehäuse 5 derselben gelagert. Andere Lagerungsformen, z.B. über eine externe am Boden der Zulaufrinne angebrachte und an der Kegelspitze des Siebtellers 11 angreifende Abstützung, sind ebenso denkbar. Bei einer Drehung der Schnecke 6 mittels deren Antriebsmotor 15 wird gleichzeitig der Siebteller 11 kontinuierlich mitrotiert.

Das mit Rechengut 3 beladene Wasser 2 strömt in der Zulaufrinne 1 gemäß der in Fig. 1 durch den Pfeil dargestellten Richtung. Die Kegelspitze des Siebtellers 11 weist in Strömungsrichtung 10, so daß das Wasser 2 in die Kegelöffnung des Siebtellers 11 hinein- und über die Sieböffnungen 12 im Siebteller 11 durch diesen hindurchströmt. Die Schneckenfördereinrichtung 4 ist so an der Zulaufrinne 1 ausgerichtet und die durch einen Pfeil markierte Förderrichtung 9 so gewählt, daß dem Wasser 2 entnommenes Rechengut 3 schräg nach oben entgegen der Strömungsrichtung 10 des Wassers 2 abtransportiert wird.

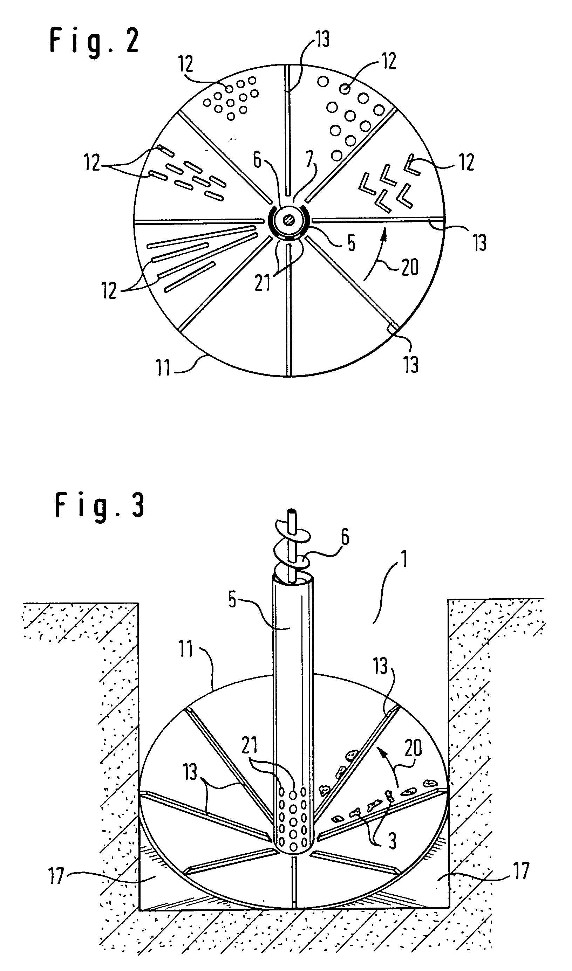

Wie insbesondere in Fig. 2 gut erkennbar, besitzt der kegelförmige Siebteller 11 in seiner umlaufenden Wand Sieböffnungen 12 in Form von runden Löchern, Langlöchern oder Schlitzen, die die Siebeigenschaft bewirken. Andere adäquate Öffnungsformen, wie die z.B. die in der Zeichnung angedeuteten schuppenförmigen Schlitze sind ebenso denkbar. Der Siebteller 11 kann sowohl nur eine einzige Sieböffnungsform aufweisen, als auch über gleichzeitig mehrere Sieböffnungsformen verfügen, um gewünschte Siebfunktionen entsprechend den vorliegenden Anforderungen anzupassen. Ebenso ist es denkbar, den Siebteller 11 aus voneinander beabstandeten Stäben zu bilden, wobei gleichzeitig die umlaufende Siebtellerkontur bzw. -wand und die Sieböffnungen 12 geformt werden.

Die Fig. 3 zeigt besonders deutlich, daß der Siebteller 11 auf seiner der Strömung 10 zugewandten Seite über sich im wesentlichen radial von der Kegelspitze des Siebtellers 11 aus zum Umfang erstreckende geradlinige Mitnehmerrippen 13 verfügt. Im Bereich der Kegelspitze des Siebtellers 11 sind die Mitnehmerrippen 13 ausgespart, um Platz für die Verbindung des Siebtellers 11 mit der Schnecke 6 der Schneckenfördereinrichtung 4 und für eine eventuelle Lagerung zu schaffen. Die Mitnehmerrippen 13 können z.B. auch sichel- oder bogenförmig ausgebildet werden, um verschiedene Fördereigenschaften zu erzielen. Auch andere, den jeweiligen Erfordernissen angepaßte Mitnehmerrippenformen z.B. in einer gewellten Ausführung sind denkbar.

Gemäß Fig. 1 beträgt der Öffnungswinkel w2 des Siebtellers 11 im vorliegenden Ausführungsbeispiel ca. 120°. Zusammen mit dem Neigungswinkel w1 der Achse 14 der Vorrichtung resultiert daraus z.B. ein Winkel w3 von ca. 10° zwischen der Siebtellerwandung und dem Boden der Zulaufrinne 1. Die genannten Winkel können je nach Ausführungsform und gewähltem Neigungswinkel w1 der Vorrichtung variieren. Dies ist in der Fig. 1 durch die gestrichelte Liniendarstellung angedeutet.

Siebteller 11 und Schneckenfördereinrichtung 4, die über einen gemeinsamen Antrieb 15 verfügen, rotieren im Arbeitsbetrieb um eine gemeinsame Drehachse 14, wobei sich im Wasser 2 befindliches Rechengut 3 vor den Sieböffnungen 12 des Siebtellers 11 staut und aufgrund der Drehbewegungen über die Mitnehmerrippen 13 in Drehrichtung 20 nach oben aus dem Wasser 2 heraus abtransportiert wird. Mit fortschreitendem Drehwinkel nimmt eine Mitnehmerrippe 13 dabei eine zunehmend schrägere Position zur Horizontalen ein. Das an der Mitnehmerrippe 13 hängende Rechengut 3 rutscht nun radial aufgrund der Schwerkraft zur Siebteller-Kegelspitze und zur Drehachse 14 der Schneckenfördereinrichtung 4. Überstreicht eine Mitnehmerrippe 13 den Bereich der am Schneckengehäuse 5 oben liegenden Eingabeöffnung 7, gleitet das Rechengut 3 in die Eingabeöffnung 7 hinein und wird durch die Schnecke 6 der Fördereinrichtung 4 abtransportiert. Im Schneckenverlauf wird das Rechengut 3 weiter zerkleinert, komprimiert und entwässert, wobei das abtropfende Wasser 2 über im Gehäuse 5 der Schneckenfördereinrichtung 4 unten liegende Ablauföffnungen 21 ablaufen kann. Über die am oberen Ende des Gehäuses 5 der Schneckenfördereinrichtung 4 befindliche Abwurfstelle 8 wird das Rechengut 1 in einen Auffangbehälter 22 gefördert.

Reste des Rechengutes 3, das noch am Siebteller 11 anhaftet und u.U. die Durchlaßöffnungen 12 verstopft, wird über eine Spritzvorrichtung 16 entfernt, die im Bereich des aus dem Wasser 2 herausragenden Teils des Siebtellers 11 angebracht ist. Die Spritzvorrichtung 16 ist länglich und mit mehreren Düsen versehen, um einen weiten Siebtellerbereich abzudecken. Es können sowohl eine als auch mehrere Spritzvorrichtungen 16 vorgesehen werden. Die Strahlrichtung der Spritzvorrichtung 16 ist in jedem Fall so gewählt, daß das die Sieböffnungen 12 des Siebtellers 11 verstopfende Rechengut 3 in den Öffnungskegel des Siebtellers 11 zurückgeschwemmt wird, um eine sinnvolle Reinigung des Wassers 2 zu gewährleisten. Das Wasser für die Spritzvorrichtung 16 kann z.B. dem von Rechengut 3 befreiten Wasser 2 der Zulaufrinne 1 hinter dem Siebteller 11 entnommen werden.

Wie in Fig. 3 angedeutet, sind Leitbleche 17 am Boden und unteren Randbereich der Zulaufrinne 1 angeordnet und so ausgestaltet, daß sie die durch die Zulaufrinne 1 und den darin arbeitenden Siebteller 11 gebildeten freien Öffnungen strömungsgünstig verschließen.

Bei einer weiteren, in den Zeichnungen nicht dargestellten Ausführungsform der erfindungsgemäßen Vorrichtung verfügen der Siebteller 11 und die Schneckenfördereinrichtung 4 über verschiedene Drehachsen. Für diese Variante kann sowohl eine gemeinsame als auch verschiedene Antriebsvorrichtungen für Siebteller 11 und Schneckenfördereinrichtung 4 vorgesehen werden. Bei gemeinsamen Antrieb bietet sich eine Verbindung der Antriebswelle des Siebtellers 11 über ein Kugel-, Kardan- oder adäquates -gelenk mit der Schneckenfördereinrichtung 4 an. Bei Verwendung eines getrennten Antriebes ist es sinnvoll, den Siebteller 11 auch getrennt von der Schneckenfördereinrichtung 4 zu lagern. Bei Verwendung verschiedener Antriebsvorrichtungen können Siebteller 11 und Schneckenfördereinrichtung 4 sowohl mit gleicher oder unterschiedlicher Drehrichtung als auch Drehgeschwindigkeit betrieben werden. Die so ausgebildete Vorrichtung ist insbesondere zur Anpassung an bestimmte bauliche Gegebenheiten und erforderliche Fördereigenschaften vorgesehen.

### Bezugszeichenliste

Es bezeichnen:
- 1: Zulaufrinne
- 2: Wasser
- 3: Rechengut
- 4: Schneckenfördereinrichtung
- 5: Gehäuse
- 6: Schnecke
- 7: Eingabeöffnung
- 8: Abwurfstelle
- 9: Förderrichtung der Schnecke
- 10: Strömungsrichtung
- 11: Siebteller
- 12: Sieböffnungen
- 13: Mitnehmerrippen
- 14: (Dreh-)Achse
- 15: Motor
- 16: Spritzvorrichtung
- 17: Leitbleche
- 18: Querlager
- 19: Hebe- und Verstelleinrichtung
- 20: Drehrichtung
- 21: Ablauföffnungen
- 22: Auffangbehälter
- w1: Winkel
- w2: Winkel
- w3: Winkel

## Patentansprüche

1. Vorrichtung zum Entfernen von Rechengut (3) aus einer von einer verunreinigten Flüssigkeit (2) durchströmten Zulaufrinne (1), insbesondere von Kläranlagen, mit einem sowohl zum Teil bis zum Boden der Zulaufrinne (1) reichenden als auch zum Teil aus der Flüssigkeit (2) herausragenden, flüssigkeitsdurchlässigen, um eine Drehachse rotierenden Siebkörper (11), wobei der Siebkörper (11) als ein mit umlaufender Wand und Sieböffnungen (12) versehenes Gebilde ausgestaltet ist, das sich in Strömungsrichtung (10) der Flüssigkeit (2) verjüngt, und einer in diesen Siebkörper (11) teilweise hineinragenden und sich daran anschließenden motorgetriebenen, schräg aufwärtsgerichteten, zu einer Abwurfstelle (8) führenden und als Schneckenfördereinrichtung (4) ausgebildeten Förderstrecke, die ein Gehäuse (5) und eine Schnecke (6) aufweist,
**dadurch gekennzeichnet, daß**
die Schneckenfördereinrichtung (4) von dem Siebkörper (11) ausgehend entgegen der Strömungsrichtung (10) zu dieser geneigt an der Zulaufrinne (1) angeordnet und dadurch die Förderrichtung so gewählt ist, daß das Rechengut (3) schräg nach oben entgegen der Strömungsrichtung (10) der Flüssigkeit (2) abtransportierbar ist.

2. Vorrichtung nach Anspruch 1, **dadurch gekennzeichnet**, daß die Schneckenfördereinrichtung (4) eine am Gehäuse (5) befindliche, oben liegende Eingabeöffnung (7) für das Rechengut (3) aufweist.

3. Vorrichtung gemäß Anspruch 1 oder 2, **dadurch gekennzeichnet**, daß der Siebkörper als kegelförmiger und sich in Strömungsrichtung (10) verjüngender Siebteller (11) ausgebildet ist.

4. Vorrichtung nach einem oder mehreren der vorgenannten Ansprüche, **dadurch gekennzeichnet**, daß der Siebkörper in seiner Stellung zur Strömungsrichtung (10) veränderbar ist.

5. Vorrichtung nach einem oder mehreren der vorgenannten Ansprüche, **dadurch gekennzeichnet**, daß die Sieböffnungen (12) des Siebkörpers als Löcher, Langlöcher, Schlitze oder in anderen adäquaten Öffnungsformen ausgebildet sind.

6. Vorrichtung nach einem oder mehreren der vorgenannten Ansprüche, **dadurch gekennzeichnet**, daß der Siebkörper auf seiner der Strömung (10) zugewandten Seite bzw. seiner Innenseite über sich im wesentlichen radial erstreckende oder auf den Erzeugenden des Siebkörpers liegende oder in anderen Richtungen angeordnete Mitnehmerrippen (13) verfügt.

7. Vorrichtung nach einem oder mehreren der vorgenannten Ansprüche, **dadurch gekennzeichnet**, daß der Siebkörper und die Schneckenfördereinrichtung (4) eine gemeinsame Drehachse (14) und/oder eine gemeinsame Antriebsvorrichtung (15) besitzen.

8. Vorrichtung nach einem oder mehreren der vorgenannten Ansprüche, **dadurch gekennzeichnet**, daß die Antriebswelle des Siebkörpers über ein Kugel-, Kardan- oder adäquates Gelenk mit der Schneckenfördereinrichtung (4) verbunden ist.

9. Vorrichtung nach einem oder mehreren der vorgenannten Ansprüche, **dadurch gekennzeichnet**, daß der Siebkörper und die Schneckenfördereinrichtung (4) über verschiedene Drehachsen und/oder Antriebswellen und/oder verschiedene Antriebsvorrichtungen verfügen und der Siebkörper separat von der Schneckenfördereinrichtung (4) gelagert ist.

10. Vorrichtung nach einem oder mehreren der vorgenannten Ansprüche, **dadurch gekennzeichnet**, daß Siebkörper und Schneckenfördereinrichtung (4) unabhängig voneinander einstellbar sind.

11. Vorrichtung nach einem oder mehreren der vorgenannten Ansprüche, **dadurch gekennzeichnet**, daß Leitbleche (17) am Boden und unteren Wandbereich der Zulaufrinne (1) angeordnet und so gestaltet sind, daß sie die durch die Zulaufrinne (1) und den darin arbeitenden Siebkörper gebildeten freien Öffnungen strömungsgünstig verschließen.

## Claims

1. Device for removing raked material (3) from a supply channel (1) through which a contaminated liquid (2) flows, in particular of sewage treatment plants, with a liquid-permeable screen body (11) which both partly reaches as far as the bottom of the supply channel (1) and partly extends out of the liquid (2) and which rotates about an axis of rotation, wherein the screen body (11) is designed as a structure which is provided with a peripheral wall and screen openings (12) and which tapers in the direction of flow (10) of the liquid (2), and a motor-driven, obliquely upwardly directed conveying zone which extends partly into and adjoins this screen body (11) and leads to a discharge point (8) and is designed as a screw conveying device (4) and which comprises a housing (5) and a screw (6), characterised in that the screw conveying device (4), starting from the screen body (11), is arranged on the supply channel (1), in a direction opposite the direction of flow and at an angle thereto, and hence the direction of conveying is selected in such a way that the raked material (3) can be transported away obliquely upwardly in a direction opposite the direction of flow (10) of the liquid (2).

2. Device according to claim 1, characterised in that the screw conveying device (4) has arranged on the housing (5) an input opening (7) for the raked material (3) which is located on the top.

3. Device according to claim 1 or 2, characterised in that the screen body is designed as a conical screen plate (11) tapering in the direction of flow (10).

4. Device according to one or more of the above claims, characterised in that the screen body is variable in its position relative to the direction of flow (10).

5. Device according to one or more of the above claims, characterised in that the screen openings (12) of the screen body are designed as holes, oblong holes, slots or in other suitable forms of openings.

6. Device according to one or more of the above claims, characterised in that the screen body on its side facing towards the flow (10) or its inner side has driver ribs (13) extending essentially radially or located on generatrices of the screen body or arranged in other directions.

7. Device according to one or more of the above claims, characterised in that the screen body and the screw conveying device (4) have a common axis of rotation (14) and/or a common drive device (15).

8. Device according to one or more of the above claims, characterised in that the drive shaft of the screen body is connected to the screw conveying device (4) by a ball, cardan or suitable joint.

9. Device according to one or more of the above claims, characterised in that the screen body and the screw conveying device (4) have different axes of rotation and/or drive shafts and/or different drive devices and the screen body is mounted separately from the screw conveying device (4).

10. Device according to one or more of the above claims, characterised in that screen body and screw conveying device (4) are adjustable independently of each other.

11. Device according to one or more of the above claims, characterised in that baffle plates (17) are arranged on the bottom and lower wall region of the supply channel (1) and designed in such a way that they close the free openings formed by the supply channel (1) and the screen body operating therein, in a manner favourable to flow.

## Revendications

1. Dispositif d'évacuation de matières de dégrillage (3) hors d'un canal d'amenée dans lequel s'écoule un fluide souillé (2) provenant en particulier d'installations de clarification, présentant un corps de tamisage (11) tournant autour d'un axe de rotation, atteignant à la fois, par une partie, le fond du canal d'amenée (1) et sortant également par une partie hors du fluide (2), pouvant être traversé par le fluide, dans lequel le corps de tamisage (11) est configuré comme un objet doté d'une paroi de révolution et d'ouvertures de tamisage (12), en cône dans la direction d'écoulement (10) du fluide (2), et une voie de transport entraînée par un moteur, pénétrant en partie dans ce corps de tamisage (11) et s'y raccordant, orientée obliquement vers le haut, conduisant à un emplacement de versage (8), et configurée comme dispositif (4) de transport par vis sans fin, qui présente un caisson (5) et une vis sans fin (6),
caractérisé en ce que
le dispositif (4) de transport par vis sans fin est disposé dans le canal d'amenée (1) en partant du corps de tamisage (11), dans la direction opposée à la direction d'écoulement (10), en oblique par rapport à celle-ci, et la direction du transport est ainsi sélectionnée de telle sorte que les matières de dégrillage (3) peuvent être évacuées obliquement vers le haut, dans la direction opposée à la direction d'écoulement (10) du fluide (2).

2. Dispositif selon la revendication 1, caractérisé en ce que le dispositif (4) de transport par vis sans fin présente une ouverture d'admission (7) à la partie supérieure, sur le caisson (5), pour les matières de dégrillage (3).

3. Dispositif selon les revendications 1 ou 2, caractérisé en ce que le corps de tamisage est configuré comme un plateau de tamisage (11) en forme de cône qui se rétrécit dans la direction d'écoulement (10).

4. Dispositif selon l'une ou plusieurs des revendications précédentes, caractérisé en ce que la position du corps de tamisage par rapport à la direction d'écoulement (10) peut être modifiée.

5. Dispositif selon l'une ou plusieurs des revendications précédentes, caractérisé en ce que les ouvertures de tamisage (12) du corps de tamisage sont réalisées sous la forme de trous, de trous oblongs, de fentes ou sous d'autres formes d'ouvertures adéquates.

6. Dispositif selon l'une ou plusieurs des revendications précédentes caractérisé en ce que, sur son côté tourné vers le courant (10), respectivement son côté intérieur, le corps de tamisage est doté de nervures d'entraînement (13) s'étendant essentiellement radialement, ou situées sur les génératrices du corps de tamisage, ou disposées dans d'autres directions.

7. Dispositif selon l'une ou plusieurs des revendications précédentes, caractérisé en ce que le corps de tamisage et le dispositif (4) de transport par vis sans fin possèdent un axe de rotation (14) commun et/ou un dispositif d'entraînement (15) commun.

8. Dispositif selon l'une ou plusieurs des revendications précédentes, caractérisé en ce que l'arbre d'entraînement du corps de tamisage est relié au dispositif (4) de transport par vis sans fin par l'intermédiaire d'une articulation sphérique, d'une articulation de Cardan ou d'une autre articulation appropriée.

9. Dispositif selon l'une ou plusieurs des revendications précédentes, caractérisé en ce que le corps de tamisage et le dispositif (4) de transport par vis sans fin sont dotés d'axes de rotation différents et/ou d'arbres d'entraînement différents et/ou de dispositifs d'entraînement différents, et le corps de tamisage est monté séparément par rapport au dispositif (4) de transport par vis sans fin.

10. Dispositif selon l'une ou plusieurs des revendications précédentes, caractérisé en ce que le corps de tamisage et le dispositif (4) de transport par vis sans fin peuvent être ajustés indépendamment l'un de l'autre.

11. Dispositif selon l'une ou plusieurs des revendications précédentes, caractérisé en ce que des tôles de guidage (17) sont disposées au fond et dans la région de la paroi inférieure du canal d'amenée (1) et sont configurées de telle sorte qu'elles ferment, d'une manière favorable pour l'écoulement, les ouvertures libres formées par le canal d'amenée (1) et le corps de tamisage travaillant dans celui-ci.
